# EUROPÄISCHE PATENTSCHRIFT

(11) **EP 0 531 838 B1**
(45) Veröffentlichungstag und Bekanntmachung des Hinweises auf die Patenterteilung: **23.10.1996**
(21) Anmeldenummer: 92114813.6
(22) Anmeldetag: 29.08.1992
(51) Int. Cl.: C08F 4/648, C08F 10/00

(54) **Verfahren zur Herstellung von Ziegler-Natta-Katalysatorsystemen**
Method for the preparation of Ziegler-Natta catalyst systems
Procédé de préparation de compositions catalytiques Ziegler-Natta

(30) Priorität: 12.09.1991 DE 4130353
(43) Veröffentlichungstag der Anmeldung: 17.03.1993
(73) Patentinhaber: BASF Aktiengesellschaft, 67063 Ludwigshafen (DE)
(72) Erfinder: Kersting, Meinolf, Dr., W-6702 Bad Duerkheim (DE); Kerth, Juergen, Dr., W-6719 Carlsberg (DE); Hungenberg, Klaus-Dieter, Dr., W-6943 Birkenau (DE); Koelle, Peter, Dr., W-6700 Ludwigshafen (DE)

(56) Entgegenhaltungen:
- EP-A- 0 170 410
- EP-A- 0 188 914
- EP-A- 0 201 647
- EP-A- 0 419 116

## Beschreibung

Die vorliegende Erfindung betrifft ein neues Verfahren zur Herstellung von Ziegler-Natta-Katalysatorsystemen, enthaltend als aktive Bestandteile
a) eine titanhaltige Feststoffkomponente, die Titan, Magnesium, Halogen und einen Carbonsäureester enthält, sowie als Cokatalysator
b) eine Aluminiumverbindung und
c) gegebenenfalls eine weitere Elektronendonorverbindung.

Außerdem betrifft die Erfindung Ziegler-Natta-Katalysatorsysteme, die nach diesem Verfahren erhältlich sind, die Herstellung von Polymerisaten des Propylens mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von α-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der EP-A 427080 ist die Herstellung von Ziegler-Natta Katalysatoren und die damit katalysierte Polymerisation von Propylen beschrieben. Diese Katalysatoren zeichnen sich durch eine gute Produktivität und die damit katalysierte Polymerisation durch eine gute Stereospezifität aus. Allerdings ist die Morphologie des Polymerpulvers für viele Zwekke nicht homogen genug, insbesondere der Anteil an Feinstkorn mit einer Partikelgröße von kleiner 0,25 mm sollte geringer sein.

Weiterhin ist aus der EP-A 419 116 ein Verfahren Zur Herstellung von Ziegler-Katalysatorsystemen bekannt, nach welchem ein Katalysator aus einer titanhaltigen Komponente und einer aluminiumhaltigen Komponente zunächst einer Vorpolymerisation unterworfen wird und anschließend mit einem sogenannten Stabilisator behandelt wird.

Der Erfindung lag daher die Aufgabe zugrunde, Ziegler-Natta-Katalysatorsysteme bereitzustellen, die eine hohe Produktivität besitzen und eine hohe Stereospezifität der Polymerisation und einen möglichst geringen Anteil an Feinstkorn im Polymerisat bewirken.

Demgemäß wurde gefunden, daß das oben erwähnte Verfahren zur Herstellung von Ziegler-Natta-Katalysatorsystemen, enthaltend als aktive Bestandteile
a) eine titanhaltige Feststoffkomponente, die Titan, Magnesium, Halogen und einen Carbonsäureester enthält, sowie als Cokatalysator
b) eine Aluminiumverbindung und
c) gegebenenfalls eine weitere Elektronendonorverbindung, besonders geeignete Katalysatorsysteme liefert, wenn man im Anschluß an die Umsetzung der titanhaltigen Feststoffkomponente mit dem Cokatalysator das Reaktionsgemisch durch Reaktion mit Kohlendioxid inaktiviert.

Die verwendeten Ziegler-Natta-Katalysatoren enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger wird SiO₂·aAl₂O₃ verwendet, wobei a für einen Wert von 0 bis 2, insbesondere von 0 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesium-di-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 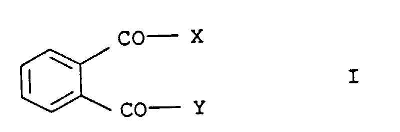 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren der allgemeinen Formeln IIa bzw. IIb, sowie Monoester von gegebenenfalls substituierten Benzophenon-2-carbonsäuren der allgemeinen Formel III

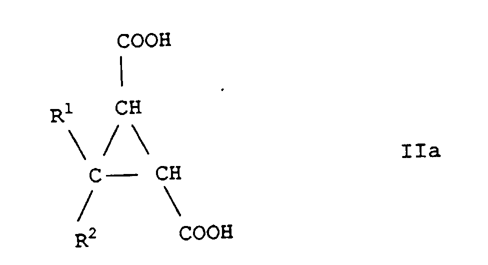

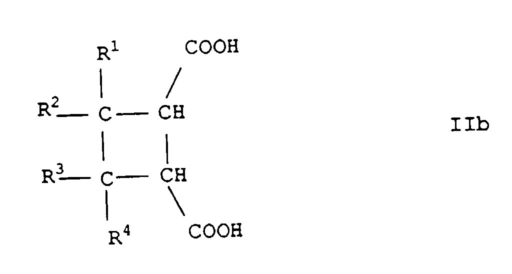

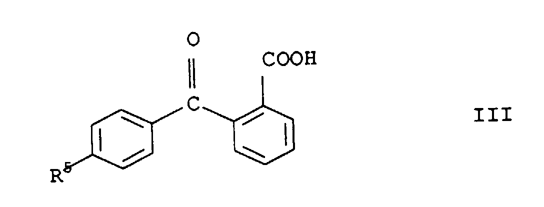

R¹, R², R³ und R⁴ können in den obigen Formeln unabhängig voneinander ein Wasserstoffatom, eine C₁- bis C₁₅-Alkylgruppe, eine C₇- bis C₁₅-Alkylarylgruppe oder eine 5- bis 7-gliedrige Cycloalkylgruppe, die ihrerseits C₁- bis C₁₀-Alkylgruppen tragen kann bedeuten, R⁵ kann in der Formel III ein Wasserstoffatom, eine C₁- bis C₅-Alkylgruppe oder ein Chloratom bedeuten.

Als Hydroxyverbindungen werden bei diesen Estern die bei Veresterungsreaktionen üblichen Alkohole verwendet, u. a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt folgendes zweistufige Verfahren angewandt:

In der ersten Stufe versetzt man zunächst einen feinteiligen Träger, bevorzugt SiO₂·aAl₂O₃ - wobei a für eine Zahl im Bereich von 0 bis 2, insbesondere im Bereich von 0 bis 0,5 steht - der in der Regel einen Teilchendurchmesser von 0,1 bis 1000 µm, insbesondere von 10 bis 300 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, des drei- oder vierwertigen Titans und 0,01 bis 1 mol, insbesondere 0,1 bis 0,5 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel IV

R¹ ₙSi(OR²)₄₋ₙ IV

wobei
R¹ eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Die einzelnen Katalysatorbestandteile können in beliebiger Reihenfolge einzeln oder als Gemisch zweier Komponenten in das Polymerisationssystem eingebracht werden.

Die Herstellung der erfindungsgemäßen Ziegler-Natta-Katalysatorsysteme erfolgt, indem man zunächst die titanhaltige Feststoffkomponente mit dem Cokatalysator umsetzt.

Die Umsetzung erfolgt zweckmäßigerweise in der flüssigen Phase. Wenn der Cokatalysator bei der Reaktionstemperatur als Flüssigkeit vorliegt kann mit oder ohne Lösungsmittel gearbeitet werden. Liegt der Cokatalysator bei der Reaktionstemperatur als Feststoff vor, empfiehlt sich die Verwendung eines inerten Lösungsmittels.

Als Lösungsmittel sind flüssige Kohlenwasserstoffe, bevorzugt C₅- bis C₁₀-Alkane, besonders bevorzugt Hexan oder Heptan, oder Gemische aus Kohlenwasserstoffen geeignet.

Der Cokatalysator wird bei einer Temperatur von -20 bis 60°C, bevorzugt bei 0 bis 25°C, mit der titanhaltigen Feststoffkomponente umgesetzt. Dazu wird die titanhaltige Feststoffkomponente zweckmäßigerweise im Cokatalysator oder in der Cokatalysator-Lösung suspendiert.

Bevorzugt werden solche Gemische verwendet, bei denen das Molverhältnis von Aluminiumverbindung zu Titan aus der titanhaltigen Feststoffkomponente 0,1:1 bis 10:1, insbesonders 1:1 bis 5:1, und das Molverhältnis von Aluminiumverbindung zu siliciumorganischer Verbindung 0,1:1 bis 200:1, insbesondere 3:1 bis 30:1 beträgt.

Die Reaktionsdauer für die Umsetzung beträgt bis zu drei Stunden, bevorzugt bis zu 30 Minuten.

Das durch Reaktion mit dem Cokatalysator aktivierte Ziegler-Natta-Katalysatorsystem wird anschließend mit trockenem Kohlendioxid umgesetzt.

Die Umsetzung erfolgt bei einer Temperatur von -20 bis 60°C, bevorzugt bei 0 bis 25°C.

Das Kohlendioxid kann als Gas direkt in die Katalysatorsuspension eingeleitet werden. Kohlendioxid kann auch in fester Form zur Katalysatorsuspension zugegeben werden. Es ist aber auch möglich, den Gasraum über der Suspension mit Kohlendioxid anzufüllen, bevorzugt mit einem Druck von 1 bis 30 bar, besonders bevorzugt 1 bis 8 bar. Diese Form der Umsetzung mit Kohlendioxid wird bevorzugt.

Zur schnelleren Umsetzung kann die Katalysatorsuspension während der Reaktion mit Kohlendioxid gerührt werden.

Die Dauer der Umsetzung beträgt üblicherweise bis zu 3 Stunden, bevorzugt wird die Umsetzung in 0,5 bis 3 Stunden durchgeführt.

Durch die Umsetzung mit Kohlendioxid wird das Katalysatorsystem inaktiviert, d. h. es ist in der Regel nicht mehr polymerisationsaktiv. Die so hergestellten Katalysatorsysteme weisen eine gute Lagerstabilität auf. Sie können z. B. als Feststoff aufbewahrt werden.

Vor einem Einsatz in einer Polymerisationsreaktion werden die erfindungsgemäß hergestellten Katalysatorsysteme durch Umsetzen mit einem Cokatalysator wieder aktiviert.

Als Cokatalysator können die gleichen Verbindungen wie bei der Umsetzung mit der titanhaltigen Feststoffkomponente verwendet werden.

Bevorzugt werden die Cokatalysatoren in einer solchen Menge eingesetzt, daß das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt.

Die erfindungsgemäß hergestellten Katalysatorsysteme eigenen sich besonders gut für die Herstellung von Polymerisaten des Propylens und von Polymerisaten des Propylens zusammen mit anderen α-Olefinen.

Die Herstellung von Polyolefinen, insbesondere von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Neben der Homopolymerisation des Propylens können auch Co- oder Terpolymerisate des Propylens mit anderen α, β-ungesättigten olefinischen Verbindungen mit 2 bis 8 C-Atomen hergestellt werden, z. B. von α-Monoolefinen oder von bifunktionellen α-Olefinen, wie beispielsweise Hexadi-1,5-en. Besonders geeignete Comonomere sind Ethylen, But-1-en, Pent-1-en, Hex-1-en und Oct-1-en. Für die Terpolymerisation besonders geeignete Comonomere sind Ethylen und But-1-en.

Die dabei erhaltenen Copolymerisate können sowohl blockartig, als auch statistisch oder alternierend aufgebaut sein. Das erfindungsgemäße Katalysatorsystem eignet sich insbesondere auch zur Herstellung von Propylen-Ethylen-Copolymerisaten mit bis zu 10 Gew.-% von einpolymerisiertem Ethylen und von Terpolymerisaten des Propylens mit untergeordneten Mengen von einpolymerisiertem Ethylen und But-1-en.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyolefine kann durch Zugabe von in der Polymerisationstechnik gebräuchlichen Reglern, beispielsweise von Wasserstoff, kontrolliert und auf eine engere Verteilung eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die erfindungsgemäß erhältlichen Propylenhomo- und -copolymerisate sind in den für die Polyolefine üblichen Molmassen erhältlich, wobei Polymerisate mit Molmassen zwischen 20 000 und 500 000 bevorzugt werden.

Das erfindungsgemäße Katalysatorsystem weist gegenüber den bisher bekannten Katalysatorsystemen eine höhere Produktivität und eine verbesserte Stereospezifität, insbesondere bei Gasphasenpolymerisationen auf. Die auf diese Weise erhältlichen Polymerisate zeichen sich vor allem durch einen sehr geringen Feinstkornanteil mit einer Partikelgröße von kleiner 0,25 mm, eine sehr gute Rieselfähigkeit, eine hohe Schüttdichte und einem niedrigen Restchlorgehalt aus.

Bei der Copolymerisation von Propylen mit α,β-ungesättigten Olefinen zeichnen sich die erfindungsgemäß erhaltenen Polymerisate durch einen äußerst geringen Anteil an Grobkorn (Partikel größer 5 mm) aus.

Aufgrund ihrer guten mechanischen Eigenschaften eignen sich die mit dem erfindungsgemäßen Katalysatorsystem hergestellten Propylenpolymerisate vor allem für die Herstellung von Folien und Formkörpern.

### Beispiele

### Beispiel 1

### a) Herstellung der titanhaltigen Feststoffkomponente (1)

In einer ersten Stufe wurde SiO₂, das einen Teilchendurchmesser von 20 bis 45 µm, ein Porenvolumen von 1,7 ml/g und eine spezifische Oberfläche von 330 m²/g aufwies, mit einer Lösung von n-Butyloctylmagnesium in n-Heptan versetzt, wobei pro Mol SiO₂ 0,33 Mol der Magnesiumverbindung eingesetzt wurden. Die Lösung wurde 45 Minuten bei 40°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,3 Mol von in Ethylbenzol gelöstem Di-isobutylphthalat jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,6 Gew.-% Ti
7,3 Gew.-% Mg
27,9 Gew.-% Cl.

### b) Voraktivierung der titanhaltigen Feststoffkomponente und anschließende Inaktivierung

In einem mit Rührer versehenen 1 l-Glasautoklaven wurden 700 ml n-Heptan vorgelegt und das Reaktionsgefäß auf eine Innentemperatur von 5°C abgekühlt. Zu dem Lösungsmittel wurden 47,4 ml Triethylaluminium (in Form einer 1,0-molaren Lösung in n-Heptan) und 1,3 ml Dimethoxyisobutylisopropylsilan (in Form einer 1,0-molaren Lösung in n-Heptan) zugegeben. Anschließend wurden 20 g der gemäß Beispiel 1a hergestellten titanhaltigen Feststoffkomponente zugegeben. Nach einer Kontaktzeit von 5 min wurde dann kontinuierlich unter Rühren über ein Einleitungsrohr 1 h lang gasförmiges, trockenes CO₂ (Durchflußmenge: 14,5 l/h) bei einem Druck von 1 bar in die Katalysatorsuspension eingeleitet. Dadurch wurde die polymerisationsaktive Katalysatorsuspension inaktiviert.

Man erhielt 23,3 g eines Feststoffes.

### c) Polymerisation von Propylen

Die Polymerisation wurde in einem vertikal gerührten Gasphasenreaktor mit einem Nutzvolumen von 800 1 in Anwesenheit von Wasserstoff als Molekulargewichtsregler durchgeführt. Der Reaktor enthielt ein bewegtes Festbett aus feinteiligem Polymerisat. Der Reaktorausstoß an Polymerisat betrug in allen Beispielen 85 kg Polypropylen pro Stunde.

In den Gasphasenreaktor wurde bei einem Druck von 32 bar und 80°C gasförmiges Propylen eingeleitet. Bei einer mittleren Verweilzeit von 2,5 Stunden wurde mit Hilfe des in Beispiel 1 b beschriebenen Katalysatorsystems kontinuierlich polymerisiert, wobei pro Stunde 4,3 g des in Beispiel 1 b beschriebenen Katalysatorsystems, 250 mMol Triethylaluminium und 25 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 8,0 g/10 min., bei 230°C und 2,16 kg (nach DIN 53 735). Die Produktivität des Katalysatorsystems, die als das Verhältnis der Menge an gebildetem Polymerisat zur Menge der titanhaltigen Feststoffkomponente definiert wird, der xylollösliche bzw. heptanlösliche Anteil, der eine Maßzahl für den Anteil an nichtisotaktischen Struktureinheiten darstellt, der Feinstkornanteil (< 0,25 mm) und der Chlorgehalt des Polymerisats, sind in der nachstehenden Tabelle 1 zusammengestellt.

### Vergleichsversuch A

Entsprechend Beispiel 1 wurde Propylen mit dem Katalysatorsystem gemäß Beispiel 1a polymerisiert; abweichend zu Beispiel 1 wurde das unter Beispiel 1b beschriebene erfindungsgemäße Verfahren der Voraktivierung und anschließender Inaktivierung ausgelassen.

In der nachstehenden Tabelle sind die Ergebnisse dieses Vergleichsversuches A ohne Voraktivierung/Inaktivierung der Katalysatorkomponente gemäß Beispiel 1a aufgeführt.

### Beispiel 2

Die titanhaltige Feststoffkomponente wurde entsprechend Beispiel 1a hergestellt.

Die Voraktivierung und anschließende Desaktivierung der titanhaltigen Feststoffkomponente erfolgte entsprechend Beispiel 1b, jedoch wurden als siliciumorganische Verbindung 1,3 ml Dicyclopentyldimethoxysilan eingesetzt.

Mit diesem voraktivierten Katalysator wurde Propylen entsprechend Beispiel 1c polymerisiert, abweichend hier zu jedoch mit Dicyclopentyldimethoxysilan als siliciumorganischer Verbindung. Die Ergebnisse sind in der nachfolgenden Tabelle 1 aufgeführt.

### Vergleichsversuch B

Entsprechend Beispiel 2 wurde Propylen mit dem Katalysatorsystem gemäß Beispiel 1a polymerisiert, abweichend hierzu jedoch mit Dicyclopentyldimethoxysilan als silicumorganischer Komponente und ohne das erfindungsgemäße Verfahren der Voraktivierung/Inaktivierung des Katalysatorsystems. Die Ergebnisse sind in der folgenden Tabelle 1 aufgeführt.

| Tabelle 1 | Produktivität (g Polymer/g titanhaltiger Feststoffkomponente) | Heptanlöslicher Anteil (Gew.-%) | Kornverteilung < 0,25 mm (%) | Chlorgehalt (ppm) |
|---|---|---|---|---|
| Beispiel 1 | 24 600 | 1,3 | 0,5 | 10 |
| Vergleichsbeispiel A | 20 500 | 1,3 | 2,9 | 12 |
| Beispiel 2 | 35 140 | 1,3 | 0,2 | 7 |
| Vergleichsbeispiel B | 17 770 | 1,5 | 2,3 | 14 |

Die Beispiele zur Copolymerisation des Propylens mit anderen Olefinen wurden in einem vertikal gerührten Gasphasenreaktor mit einem Nutzvolumen von 800 l in Anwesenheit von Wasserstoff als Molekulargewichtsregler durchgeführt. Der Reaktor enthielt ein bewegtes Festbett aus feinteiligem Polymerisat. Der Reaktorausstoß an Polymerisat betrug in allen Beispielen 85 kg Polypropylen pro Stunde.

### Beispiel 3

In den Gasphasenreaktor wurde bei einem Druck von 23 bar und einer Temperatur von 80°C ein gasförmiges Gemisch aus Propylen und Ethylen eingeleitet, wobei das Verhältnis zwischen dem Partialdruck des Propylens und dem des Ethylens 25:1 betrug. Dieses Gemisch wurde bei einer mittleren Verweilzeit von 2,5 Stunden mit Hilfe eines gemäß Beispiel 1a und 1b hergestellten Ziegler-Natta-Katalysators kontinuierlich polymerisiert, wobei pro Stunde 2,5 g einer titanhaltigen Feststoffkomponente, 250 mmol Triethylaluminium und 25 mmol Dimethoxyisobutylisoproyplsilan als Katalysatorbestandteile verwendet wurden.

### Beispiel 4

Entsprechend Beispiel 3 wurde Propylen und Ethylen polymerisiert. Es wurde jedoch ein Partialdruckverhältnis von Propylen zu Ethylen von 20:1 eingestellt.

### Beispiel 5

Mit dem gleichen Katalysatorsystem und unter sonst gleichen Reaktionsbedingungen wie in Beispiel 3 beschrieben, wurde ein gasförmiges Gemisch aus Propylen, Ethylen und But-1-en polymerisiert. Das Verhältnis der Partialdrücke zwischen Propylen, Ethylen und But-1-en betrug dabei 25:1:0,65, die mittlere Verweilzeit des Polymerisats lag bei 2,7 Stunden.

### Beispiel 6

Entsprechend Beispiel 5, wurde Propylen, Ethylen und But-1-en polymerisiert. Es wurde jedoch mit einem Partialdruckverhältnis von Propylen zu Ethylen zu But-1-en von 20:1:0,9 polymerisiert.

### Vergleichsversuche C bis F

Entsprechend den Beispielen 3-6 wurden die Vergleichsversuche C bis F durchgeführt, jedoch wurde das erfindungsgemäße Verfahren der Voraktivierung/Inaktivierung ausgelassen. Die Ergebnisse sind in Tab. 2 aufgeführt.

| Tabelle 2 | Comonomergehalte des Polymerisats (Gew.-%) | | Produktivität (g Polymer/g titanhaltiger Feststoffkomponente | Schüttdichte g/l | Xylol-löslicher Anteil (Gew.-%) |
|---|---|---|---|---|---|
| | C₂ | C₄ | | | |
| Beispiel 3 | 2,9 | - | 24 600 | 418 | 3,8 |
| Vergleichsbeispiel C | 2,6 | - | 15 670 | 406 | 4,0 |
| Beispiel 4 | 3,6 | - | 24 600 | 442 | 5,3 |
| Vergleichsbeispiel D | 3,8 | - | 29 000 | 362 | 7,3 |
| Beispiel 5 | 3,8 | 2,3 | 22 580 | 378 | 9,4 |
| Vergleichsbeispiel E | 3,9 | 2,3 | 19 170 | 350 | 10,3 |
| Beispiel 6 | 4,0 | 5,5 | 30 125 | 311 | 12,7 |
| Vergleichsbeispiel F | 4,8 | 5,2 | 18 920 | 377 | 16,5 |

## Patentansprüche

1. Verfahren zur Herstellung von Ziegler-Natta-Katalysatorsystemen, enthaltend als aktive Bestandteile
a) eine titanhaltige Feststoffkomponente, die Titan, Magnesium, Halogen und einen Carbonsäureester enthält, sowie als Cokatalysator
b) eine Aluminiumverbindung und
c) gegebenenfalls eine weitere Elektronendonorverbindung,
dadurch gekennzeichnet, daß man im Anschluß an die Umsetzung der titanhaltigen Feststoffkomponente mit dem Cokatalysator das Reaktionsgemisch durch Reaktion mit Kohlendioxid inaktiviert.

2. Ziegler-Natta-Katalysatorsysteme, hergestellt nach einem Verfahren gemäß Anspruch 1.

3. Verfahren zur Herstellung von Polymerisaten des Propylens durch polymerisation von Propylen und gegebenenfalls von zugegebenen Comonomeren bei Temperaturen von 20 bis 150°C und Drücken von 1 bis 100 bar in Gegenwart von Ziegler-Natta-Katalysatorsystemen, dadurch gekennzeichnet, daß man Katalysatorsysteme gemäß Anspruch 2 verwendet.

## Claims

1. A process for the preparation of a Ziegler-Natta catalyst system containing, as active components,
a) a titanium-containing solid component which contains titanium, magnesium, halogen and a carboxylic ester and, as a cocatalyst,
b) an aluminum compound and
c) if required, a further electron donor,
wherein, after the reaction of the titanium-containing solid component with the cocatalyst, the reaction mixture is deactivated by reaction with carbon dioxide.

2. A Ziegler-Natta catalyst system prepared by a process as claimed in claim 1.

3. A process for the preparation of polymers of propylene by polymerizing propylene and, if required, added comonomers at from 20 to 150°C and from 1 to 100 bar in the presence of a Ziegler-Natta catalyst system, wherein a catalyst system as claimed in claim 2 is used.

## Revendications

1. Procédé de préparation de systèmes catalytiques de Ziegler-Natta contenant, comme constituants actifs,
a) un composant solide au titane qui contient du titane, du magnésium, un halogène et un ester d'acide carboxylique, et, en tant que co-catalyseur,
b) un composé de l'aluminium et
c) éventuellement un autre composé donneur d'électrons,
caractérisé en ce qu'à la suite de la réaction du composant solide au titane avec le co-catalyseur, on rend inactif le mélange réactionnel par réaction avec de l'anhydride carbonique.

2. Systèmes catalytiques de Ziegler-Natta, préparés par un procédé selon la revendication 1.

3. Procédé de préparation de polymères du propylène par polymérisation de propylène et éventuellement de comonomères ajoutés, à des températures de 20 à 150°C et sous des pressions de 1 à 100 bar, en présence de systèmes catalytiques de Ziegler-Natta, caractérisé en ce que l'on utilise des systèmes catalytiques selon la revendication 2.
